(19) Europäisches Patentamt
European Patent Office
Office européen des brevets

(11) **EP 1 189 991 B1**

(12) **FASCICULE DE BREVET EUROPEEN**

(45) Date de publication et mention
de la délivrance du brevet:
**20.09.2006 Bulletin 2006/38**

(51) Int Cl.:
*C08L 95/00* (2006.01)      *E01C 7/18* (2006.01)
*E01C 7/26* (2006.01)      *C09D 195/00* (2006.01)

(21) Numéro de dépôt: **00951629.5**

(22) Date de dépôt: **21.06.2000**

(86) Numéro de dépôt international:
**PCT/FR2000/001711**

(87) Numéro de publication internationale:
**WO 2000/078870 (28.12.2000 Gazette 2000/52)**

(54) **PROCEDE DE PREPARATION DE COMPOSITIONS BITUME/POLYMERE RETICULEES ET/OU FONCTIONNALISEES, COMPOSITIONS AINSI OBTENUES ET LEUR APPLICATION A LA REALISATION DE REVETEMENTS**

VERFAHREN ZUR HERSTELLUNG VON VERNETZTEN UND/ODER FUNKTIONALISIERTEN BITUMEN-POLYMERENZUSAMMENSETZUNGEN, ZUSAMMENSETZUNGEN UND DEREN VERWENDUNG ZUR HERSTELUNG VON BESCHICHTUNGEN

METHOD FOR THE PRODUCTION OF CROSS-LINKED AND/OR FUNCTIONALISED BITUMEN/ POLYMER COMPOSITIONS, SAID COMPOSITIONS AND USE THEREOF IN COATINGS

(84) Etats contractants désignés:
**AT BE CH CY DE DK ES FI FR GB GR IE IT LI LU MC NL PT SE**

(30) Priorité: **22.06.1999 FR 9907914**

(43) Date de publication de la demande:
**27.03.2002 Bulletin 2002/13**

(73) Titulaire: **ELF ANTAR FRANCE
92400 Courbevoie (FR)**

(72) Inventeurs:
 • **PLANCHE, Jean-Pascal
   F-38540 Saint Just-Chaleyssin (FR)**
 • **TURELLO, Patrick
   F-69340 Francheville (FR)**
 • **CHAVEROT, Pierre
   F-42730 Saint-Martin la Plaine (FR)**
 • **VEGNY, Patrice
   F-69360 Ternay (FR)**

(74) Mandataire: **Jolly, Jean-Pierre et al
   Cabinet Jolly
   54, rue de Clichy
   75009 Paris (FR)**

(56) Documents cités:
 **EP-A- 0 559 462          WO-A-93/18092
 WO-A-97/43341          FR-A- 2 739 863**

 • **PATENT ABSTRACTS OF JAPAN vol. 1997, no. 08, 29 août 1997 (1997-08-29) & JP 09 095616 A (COSMO SOGO KENKYUSHO:KK;COSMO OIL CO LTD), 8 avril 1997 (1997-04-08)**

**Description**

L'invention a trait à un procédé de préparation de compositions bitume/polymère réticulées et/ou fonctionnalisées à très faible susceptibilité thermique. Elle concerne aussi les compositions susceptibles d'être obtenues par ce procédé et leur application à la réalisation de revêtements et, en particulier, de revêtements superficiels routiers, d'enrobés ou encore de revêtements d'étanchéité.

Il est connu d'utiliser des compositions bitumineuses comme revêtements de surfaces diverses et en particulier comme enduits superficiels routier à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :

- point de ramollissement, exprimé en °C et déterminé par l'essai Bille et Anneau défini par la norme NF T 66008,
- point de fragilité ou point de Fraass, exprimé en °C et déterminé selon la norme IP 80/53,
- pénétrabilité, exprimée en 1/10 de mm et déterminée selon la norme NF T 66004,
- caractéristiques rhéologiques en traction déterminées selon la norme NF T46002 et comportant les grandeurs :

  - contrainte au seuil $\sigma_s$ en MPa,
  - allongement au seuil $\varepsilon_s$ en %,
  - contrainte à la rupture $\sigma_r$ en MPa,
  - allongement à la rupture $\varepsilon_r$ en %.

On peut également obtenir une indication de la susceptibilité thermique des compositions bitumineuses à partir d'une corrélation entre la pénétrabilité (en abrégé pen) et le point de ramollissement (en abrégé TBA) desdites compositions, connue sous le nom d'indice de PFEIFFER (en abrégé IP).

Cet indice se calcule par la relation :

$$IP = \frac{20 - 500\,A}{1 + 50\,A}$$

dans laquelle A est la pente de la droite représentée par l'équation :

$$A = \frac{\log_{10}800 - \log_{10}\mathrm{pen}}{TBA - 25}$$

La susceptibilité thermique de la composition bitumineuse est d'autant plus faible que la valeur de l'indice de PFEIFFER est plus grande ou, ce qui revient au même, que la valeur de la grandeur A est plus faible. Pour les bitumes de distillation, l'indice de PFEIFFER prend des valeurs négatives.

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume/polymère ayant des qualités mécaniques améliorées par rapport à celles des bitumes seuls.

Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylates, polychloroprène, copolymères éthylène/propylène, terpolymères éthylène/propylène/diène (EPDM), polynorbornène ou encore copolymères statistiques ou séquencés de styrène et d'un diène conjugué.

Parmi les polymères ajoutés aux bitumes, les copolymères statistiques ou séquencés de styrène et d'un diène conjugué et notamment de styrène et de butadiène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume/polymère pour lesquelles le polymère ajouté au bitume est un élastomère, notamment copolymère de styrène et d'un diène conjugué tel que butadiène, peut être améliorée par des réactions, réalisées in situ, de couplage chimique du polymère au bitume, au moyen d'un agent de couplage donneur de soufre (FR-A-2376188, FR-A-2429241, FR-A-2528439 et EP-A-360656), ou de fonctionnalisation du polymère au moyen d'un agent de fonctionnalisation du type acide ou ester carboxylique à groupements thiols ou disulfures (WO-A-9714754) ou du type polyester d'acide thiolcarboxylique (WO-A-9847967).

On a maintenant trouvé que l'on pouvait encore améliorer certaines caractéristiques mécaniques et rhéologiques, notamment consistance et propriétés mécaniques en traction, et réduire la susceptibilité thermique des compositions bitume/polymère, dites compositions bitume/polymère réticulées et/ou fonctionnalisées, obtenues par réaction de couplage chimique du polymère au bitume et/ou de fonctionnalisation du polymère, lorsque le bitume utilisé pour la préparation de la composition bitume/polymère réticulée et/ou fonctionnalisée renfermait une quantité appropriée de bitume oxydé.

L'invention a donc pour premier objet un procédé de préparation de compositions bitume/polymère réticulées et/ou fonctionnalisées à très faible susceptibilité thermique, obtenues par couplage chimique du polymère au bitume, dans lequel, en opérant à des températures comprises entre 100°C et 230°C, de préférence entre 130°C et 200°C, et sous agitation, on forme une masse homogène représentant la composition bitume/polymère et constituée d'une matrice bitumineuse dans laquelle est dispersé uniformément un élastomère réticulé et/ou fonctionnalisé, formé à partir d'un élastomère précurseur utilisé en quantité comprise entre 0,5 % et 30 % et plus particulièrement entre 1,5 % et 20 % du poids de la matrice bitumineuse, ledit procédé se caractérisant en ce que l'on constitue la matrice bitumineuse en associant, en poids, x % d'un bitume non oxydé, ayant une pénétrabilité comprise entre 35 et 500, et y % d'un bitume oxydé, ayant une pénétrabilité comprise entre 20 et 60, lesdites pénétrabilités étant déterminées selon la norme NF T 66004 et exprimées en 1/10 de mm, les valeurs de x et y étant telles que $20 \leq x \leq 95$ et $5 \leq y \leq 80$ avec x+y = 100.

Un autre objet de l'invention est constitué par l'application des compositions bitume/polymère réticulées et/ou fonctionnalisées à très faible susceptibilité thermique aptes à être obtenues par ce procédé comme liants bitumeux utilisables, directement ou après mise en émulsion aqueuse, pour la réalisation de revêtements routiers.

Avantageusement, les pourcentages pondéraux x % de bitume non oxydé et y % de bitume oxydé, associés pour former la matrice bitumineuse de la composition bitume/polymère, sont tels que $35 \leq x \leq 85$ et $15 \leq y \leq 65$ avec x+y = 100.

Le bitume non oxydé, qui est utilisé pour former une partie de la matrice bitumineuse, consiste en un bitume unique ou en un mélange de bitumes avantageusement pris parmi les bitumes de distillation directe, les bitumes de distillation sous pression réduite, les résidus de désasphaltage au propane ou au pentane et les résidus de viscoréduction. Tout spécialement, le bitume non oxydé est un bitume ou mélange de bitumes pris parmi les bitumes de distillation directe.

Le bitume oxydé, auquel on fait appel pour former l'autre partie de la matrice bitumineuse, consiste en un bitume oxydé unique ou en un mélange de bitumes oxydés pris avantageusement parmi les bitumes soufflés et les bitumes semi-soufflés.

Selon une forme de réalisation préférée, le bitume oxydé utilisé dans la constitution de la matrice bitumineuse possède un point de ramollissement bille et anneau, défini selon la norme NF T 66008, allant de 60°C à 120°C. L'élastomère réticulé et/ou fonctionnalisé, qui est présent dans la composition bitume/polymère produite par le procédé selon l'invention, est formé par réticulation et/ou fonctionnalisation d'un élastomère précurseur, qui peut être tel que polyisoprène, polynorbornène, polybutadiène, caoutchouc butyle, terpolymère éthylène/propylène/diène (EPDM). Avantageusement, l'élastomère précurseur consiste en au moins un copolymère choisi parmi les copolymères statistiques ou séquencés de styrène et d'un diène conjugué tel que butadiène, isoprène, chloroprène, butadiène carboxylé ou isoprène carboxylé. Plus particulièrement, l'élastomère précurseur consiste en un ou plusieurs copolymères choisis parmi les copolymères séquencés linéaires ou étoilés, avec ou sans charnière statistique, de styrène et de butadiène, de styrène et d'isoprène, de styrène et de chloroprène, de styrène et de butadiène carboxylé ou encore de styrène et d'isoprène carboxylé. Les copolymères précurseurs de styrène et de diène conjugué, et en particulier chacun des copolymères précités, possèdent avantageusement une teneur en styrène allant de 5% à 50% en poids. Ces copolymères de styrène et de diène conjugué, et notamment les copolymères mentionnés ci-dessus, présentent, avant réticulation et/ou fonctionnalisation, des masses moléculaires moyennes en poids comprises, par exemple, entre 10 000 daltons et 600 000 daltons et de préférence entre 30 000 daltons et 400 000 daltons. De préférence, les copolymères précurseurs de styrène et de diène conjugué sont choisis parmi les copolymères di- ou triséquencés de styrène et de butadiène, de styrène et d'isoprène, de styrène et de butadiène carboxylé ou encore de styrène et d'isoprène carboxylé, qui ont des masses moléculaires moyennes en poids et des teneurs pondérales en styrène situées dans les intervalles définis précédemment.

L'élastomère réticulé et/ou fonctionnalisé présent dans la composition bitume/polymère préparée par le procédé selon l'invention, en particulier l'un ou l'autre des élastomères réticulés et/ou fonctionnalisés produits par réticulation et/ou fonctionnalisation des élastomères précurseurs précités, peut résulter, par exemple, de la réticulation au soufre de l'élastomère précurseur et/ou d'une fonctionnalisation dudit élastomère précurseur.

Selon une première forme de mise en oeuvre, le procédé de préparation des compositions bitume/polymère réticulées et/ou fonctionnalisées consiste à mettre en contact, en opérant à des températures comprises entre 100°C et 230°C, de préférence entre 130°C et 200°C, et sous agitation pendant une durée d'au moins 5 minutes, le bitume non oxydé et le bitume oxydé choisis pour constituer la matrice bitumineuse, avec, comptés en poids de ladite matrice, 0,5% à 30% et de préférence 1,5% à 20% d'un élastomère précurseur, à savoir élastomère non réticulé et non fonctionnalisé, et 0,01% à 6%, plus particulièrement 0,05% à 3%, d'un agent de réticulation et/ou d'un agent de fonctionnalisation.

De préférence, dans cette première forme de mise en oeuvre, on met tout d'abord en contact l'élastomère précurseur avec les bitumes non oxydé et oxydé, en opérant à des températures comprises entre 100°C et 230°C, de préférence entre 130°C et 200°C, et sous agitation pendant une durée allant de 5 minutes à 8 heures, notamment de 30 minutes à 6 heures, pour former un mélange homogène, puis on incorpore audit mélange l'agent de réticulation et/ou l'agent de fonctionnalisation, en quantité appropriée choisie dans les intervalles définis plus haut pour ladite quantité, et on maintient le tout sous agitation à des températures comprises entre 100°C et 230°C, de préférence entre 130°C et 200°C, et identiques ou non aux températures de mélange de l'élastomère précurseur avec les bitumes non oxydé et oxydé formant la matrice bitumineuse, pendant une durée allant de 5 minutes à 5 heures, plus particulièrement de 10 minutes à 180 minutes, pour former un produit de réaction constituant la composition bitume/polymère réticulée et/ou fonctionnalisée.

Selon une deuxième forme de mise en oeuvre, le procédé de préparation des compositions bitume/polymère réticulées et/ou fonctionnalisées consiste, dans une première étape, à préparer un concentré par mise en contact, en opérant à des températures comprises entre 100°C et 230°C, de préférence entre 130°C et 200°C, et sous agitation pendant une durée d'au moins 5 minutes, de 50% à 100% du bitume non oxydé entrant dans la composition de la matrice bitumineuse, avec, comptés en poids de ladite matrice, 5% à 30% de l'élastomère précurseur et 0,01% à 6%, plus particulièrement 0,05% à 3%, d'un agent de réticulation et/ou d'un agent de fonctionnalisation, pour former un produit de réaction bitume/polymère réticulé et/ou fonctionnalisé, puis, dans une deuxième étape, à diluer le produit de réaction bitume/polymère réticulé et/ou fonctionnalisé issu de la première étape, en lui incorporant le bitume oxydé et la fraction éventuellement restante de bitume non oxydé, en opérant à des températures comprises entre 100°C et 230°C, de préférence entre 130°C et 200°C, et sous agitation, pour former la composition bitume/polymère réticulée et/ou fonctionnalisée .

De préférence, on met en oeuvre la première étape de cette deuxième forme de mise en oeuvre, en mettant tout d'abord en contact l'élastomère précurseur avec le bitume non oxydé, en opérant à des températures comprises entre 100°C et 230°C, de préférence entre 130°C et 200°C, et sous agitation pendant une durée allant de 5 minutes à 8 heures, notamment de 30 minutes à 6 heures, pour former un mélange homogène, puis en incorporant audit mélange l'agent de réticulation et/ou l'agent de fonctionnalisation, en quantité appropriée choisie dans les intervalles définis plus haut pour ladite quantité, et en maintenant le tout sous agitation à des températures comprises entre 100°C et 230°C, de préférence entre 130°C et 200°C, et identiques ou non aux températures de mélange de l'élastomère précurseur avec le bitume non oxydé, pendant une durée allant de 5 minutes à 5 heures, plus particulièrement de 10 minutes à 180 minutes, pour former le produit de réaction bitume/polymère réticulé et/ou fonctionnalisé.

L'agent de réticulation, utilisé dans les formes de mise en oeuvre précitées pour former l'élastomère réticulé au sein de la matrice bitumineuse à partir de l'élastomère précurseur, peut être notamment un agent de réticulation du type donneur de soufre ou un agent de réticulation du type composé peroxydé générant des radicaux libres aux températures comprises entre 100°C et 230°C.

L'agent de réticulation donneur de soufre peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de réticulation donneur de soufre peut être choisi parmi les produits M, qui renferment, en poids, de 0% à 100% d'une composante CA consistant en un ou plusieurs accélérateurs de vulcanisation donneurs de soufre et de 100% à 0% d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

Le soufre élémentaire susceptible d'être utilisé pour constituer, en partie ou en totalité, l'agent de réticulation est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de réticulation peuvent être choisis parmi les différents polysulfures d'hydrocarbyle qui sont définis dans la citation FR-A-2528439 et qui incluent, à titre préféré, les polysulfures de formule $R_{11}$-$(S)_p$-$R_{11}$, dans laquelle $R_{11}$ désigne un tertio-dodécyle, hexadécyle, nonyle, décyle, et -$(S)_p$- représente un groupement divalent formé par un enchaînement de p atomes de soufre, p étant un nombre entier allant de 2 à 5.

Lorsque l'agent de réticulation renferme un accélérateur de vulcanisation donneur de soufre, ce dernier peut être choisi, en particulier, parmi les polysulfures de thiurame, les disulfures d'alkylphénols et les disulfures tels que disulfure de morpholine et N,N'-disulfure de caprolactame, qui sont mentionnés dans les citations EP-A-0360656 et EP-A-0409683.

De même, les accélérateurs de vulcanisation non donneurs de soufre utilisables pour former la composante CC dés agents de réticulation de type produit N peuvent être des composés soufrés choisis notamment parmi les composés tels que le mercaptobenzothiazole et ses dérivés, notamment benzothiazole thiolates métalliques et surtout benzothiazolesulfénamides, les dithiocarbamates métalliques et les monosulfures de thiurame, qui sont définis dans les citations EP-A-0360656 et EP-A-0409683.

D'autres accélérateurs de vulcanisation non donneurs de soufre, qui n'appartiennent pas aux familles définies plus haut, peuvent être également utilisés pour former la composante CC. De tels accélérateurs de vulcanisation peuvent être tels que diphényl-1,3 guanidine, diorthotolylguanidine et oxyde de zinc, ce dernier composé étant utilisé éventuellement en présence d'acide gras.

De par sa composition, comme indiqué plus haut, l'agent de réticulation donneur de soufre peut être du type monocomposante ou du type multicomposante, l'agent de réticulation du type multicomposante pouvant être formé préalablement à son utilisation ou encore produit in situ dans le milieu dans lequel il doit être présent. L'agent de réticulation du type multicomposante préformé ou du type monocomposante ou les composantes de l'agent de réticulation du type multicomposante formé in situ peuvent être mis en oeuvre tels quels, par exemple à l'état fondu, ou bien en mélange, par exemple en solution ou en suspension, avec un diluant, par exemple un composé hydrocarboné.

Le composé peroxydé, générateur de radicaux libres aux températures comprises entre 100°C et 230°C, que l'on peut utiliser comme agent de réticulation, pour produire l'élastomère réticulé au sein de la matrice bitumineuse, peut être choisi, notamment, parmi les peroxydes de dihydrocarbyle comme, par exemple, le peroxyde de ditertiobutyle et le peroxyde de dicumyle.

L'agent de fonctionnalisation que l'on utilise pour produire l'élastomère fonctionnalisé, de préférence au sein de la matrice bitumineuse, par le biais d'une réaction avec l'élastomère précurseur, peut consister en un produit choisi parmi les acides ou esters carboxyliques à groupements thiols ou disulfures, et notamment parmi ceux desdits acides ou esters carboxyliques qui sont proposés dans ce but dans la citation WO-A-9714754, ou parmi les polyesters, modifiés ou non, d'acides thiolcarboxyliques, et notamment parmi ceux desdits polyesters qui sont proposés dans ce but dans la citation WO-A-9847967.

Pour plus de détails sur la mise en oeuvre des agents de réticulation ou des agents de fonctionnalisation, pour la production de l'élastomère réticulé ou fonctionnalisé au sein de la matrice bitumineuse, on peut se référer, notamment, aux citations FR-A-2528439, EP-A-0360656 et EP-A-0409683, pour ce qui concerne l'agent de réticulation, et aux citations WO-A-9714754 et WO-A-9847967, pour ce qui concerne l'agent de fonctionnalisation.

Outre l'élastomère réticulé et/ou fonctionnalisé, la composition bitume /polymère réticulée et/ou fonctionnalisée selon l'invention peut encore renfermer un ou plusieurs polymères additionnels différents dudit élastomère réticulé et/ou fonctionnalisé, le ou lesdits polymères additionnels étant en particulier des polymères oléfiniques tels que polyéthylène, polypropylène, polybutène, polyisobutène, copolymères éthylène/acétate de vinyle, copolymères éthylène/propylène, copolymères éthylène/acrylate ou méthacrylate d'alkyle, des polymères oléfiniques fonctionnalisés à groupements époxy ou COOH tels que copolymères éthylène/acrylate ou méthacrylate de glycidyle, terpolymères éthylène/acrylate ou méthacrylate d'alkyle/acrylate ou méthacrylate de glycidyle et notamment terpolymères éthylène/ acrylate de méthyle/méthacrylate de glycidyle et terpolymères éthylène/acrylate ou méthacrylate d'alkyle/anhydride maléique et notamment terpolymères éthylène/acrylate de butyle/anhydride maléique.

La quantité du ou des polymères additionnels dans la composition bitume/polymère réticulée et/ou fonctionnalisée peut être comprise entre 0,3% et 20% et de préférence entre 0,5% et 10% du poids global de bitume de ladite composition.

Le ou les polymères additionnels éventuels sont incorporés avantageusement à la matrice bitumineuse lors de l'incorporation de l'élastomère précurseur à ladite matrice, avant mise en oeuvre de la réticulation ou de la fonctionnalisation.

Au cours de sa constitution, la composition bitume/polymère réticulée et/ou fonctionnalisée peut être encore additionnée de 1% à 40% et plus particulièrement de 2% à 30%, en poids du bitume, d'un agent fluxant, qui peut consister, notamment, en une huile hydrocarbonée présentant un intervalle de distillation à pression atmosphérique, déterminé selon la norme ASTM D 86-67, compris entre 100°C et 600°C et situé plus spécialement entre 150°C et 350°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/polymère la contenant, de manière à retrouver les mêmes propriétés mécaniques qu'aurait présentées, après répandage à chaud, la composition bitume/polymère préparée sans utiliser d'agent fluxant. L'agent fluxant peut être ajouté au milieu que l'on forme à partir du bitume, de l'élastomère précurseur et, le cas échéant, du ou des polymères additionnels éventuels et de l'agent de réticulation et/ou de l'agent de fonctionnalisation, à un moment quelconque de la constitution dudit milieu, la quantité d'agent fluxant étant choisie, dans les intervalles définis plus haut, pour être compatible avec l'usage final désiré sur le chantier.

Au cours de sa formation, le produit de réaction constituant la composition bitume/polymère fonctionnalisée, peut être avantageusement additionné, en opérant à des températures comprises entre 100°C et 230°C et plus particulièrement entre 130°C et 200°C, d'un ou plusieurs additifs susceptibles de réagir avec les groupements fonctionnels, par exemple groupements acides ou esters carboxyliques portés par l'élastomère fonctionnalisé et éventuellement par le bitume de la composition bitume/polymère fonctionnalisée, pour activer ou renforcer la liaison entre les chaînes macromoléculaires dudit élastomère fonctionnalisé ou/et entre lesdites chaînes macromoléculaires et le bitume et ainsi renforcer les caractéristiques physicomécaniques de la composition bitume/polymère fonctionnalisée. Ces additifs réactifs peuvent être en particulier des amines, notamment polyamines, primaires ou secondaires, des alcools, notamment polyols, des aminoalcools, des époxydes, des acides, notamment polyacides, ou encore des composés métalliques. Des exemples de tels additifs appropriés sont donnés, notamment, dans les citations WO-A-9714754 et WO-A9847967.

La quantité de l'additif réactif ou des additifs réactifs précités, que l'on incorpore au milieu réactionnel donnant naissance aux compositions bitume/polymère fonctionnalisées, peut aller de 0,01% à 10% et plus particulièrement de 0,05% à 5% du poids de bitume présent dans ledit milieu réactionnel.

On peut encore incorporer au milieu générant les compositions bitume/polymère réticulées et/ou fonctionnalisées, à un moment quelconque de la constitution dudit milieu, des additifs conventionnellement utilisés dans les compositions bitume/polymère réticulées et/ou fonctionnalisées tels que des promoteurs d'adhésion de la composition bitume/polymère réticulée et/ou fonctionnalisée aux surfaces minérales ou encore des charges comme le talc, le noir de carbone, les pneus usagés réduits en poudrette.

Dans une forme de mise en oeuvre de la production de la composition bitume/polymère réticulée et/ou fonctionnalisée utilisant une huile hydrocarbonée telle que définie plus haut, à titre d'agent fluxant, l'élastomère précurseur, le ou les polymères additionnels éventuels et, si désiré, l'agent de réticulation et/ou l'agent de fonctionnalisation sont incorporés au bitume sous la forme d'une solution mère de ces produits dans l'huile hydrocarbonée constituant l'agent fluxant.

La solution mère est préparée par mise en contact des ingrédients la composant, à savoir huile hydrocarbonée servant de solvant, élastomère précurseur et, si présents, polymère(s) additionnel(s) et agent de réticulation et/ou agent de fonctionnalisation, sous agitation, à des températures comprises entre 10°C et 170°C et plus particulièrement entre 40°C et 120°C, pendant une durée suffisante, par exemple comprise entre 10 minutes et 2 heures, pour obtenir une dissolution complète des ingrédients polymériques et de l'agent de réticulation et/ou de l'agent de fonctionnalisation dans l'huile hydrocarbonée.

Les concentrations respectives de l'élastomère précurseur et, si présents, du (des) polymère(s) additionnel(s) et de l'agent de réticulation et/ou de l'agent de fonctionnalisation, dans la solution mère, peuvent varier assez largement en fonction, notamment, de la nature de l'huile hydrocarbonée utilisée pour dissoudre lesdits ingrédients polymères et l'agent de réticulation et/ou l'agent de fonctionnalisation. Avantageusement, la solution mère renferme une quantité d'élastomère précurseur représentant entre 5% et 40% et plus particulièrement entre 10% et 30% du poids de l'huile hydrocarbonée. Lorsqu'il est présent dans la solution mère, l'agent de réticulation et/ou l'agent de fonctionnalisation, est utilisé en quantité comprise, notamment, entre 0,05% et 15% et plus particulièrement entre 0,1% et 8% du poids de l'huile hydrocarbonée.

Pour préparer les compositions bitume/polymère réticulées et/ou fonctionnalisées ou les concentrés bitume/polymère réticulés et/ou fonctionnalisés en faisant appel à la technique de la solution mère, on mélange la solution mère renfermant l'élastomère précurseur et, si utilisés, le ou les polymères additionnels et l'agent de réticulation et/ou l'agent de fonctionnalisation, avec le bitume en opérant à des températures comprises entre 100°C et 230°C, plus particulièrement entre 130°C et 200°C, et sous agitation, ceci étant réalisé, par exemple, en incorporant la solution mère au bitume maintenu sous agitation aux températures entre 100°C et 230°C et plus particulièrement entre 130°C et 200°C, puis on maintient le mélange résultant sous agitation à des températures comprises entre 100°C et 230°C, plus particulièrement entre 130°C et 200°C, par exemple aux températures utilisées pour réaliser le mélange de la solution mère avec le bitume, pendant une durée au moins égale à 5 minutes, et généralement allant de 10 minutes à 2 heures, pour former un produit constituant la composition bitume/polymère réticulée et/ou fonctionnalisée ou le concentré bitume/polymère réticulé et/ou fonctionnalisé.

La quantité de solution mère mélangée au bitume est choisie pour fournir les quantités désirées, par rapport au bitume, d'élastomère précurseur, de polymère(s) additionnel(s) et d'agent de réticulation et/ou d'agent de fonctionnalisation, lesdites quantités étant situées dans les fourchettes définies précédemment.

Immédiatement après son obtention, la composition bitume/polymère réticulée et/ou fonctionnalisée, produite par le procédé selon l'invention, peut être soumise à un traitement au moyen d'un adjuvant acide, par exemple constitué d'au moins un acide choisi parmi l'acide phosphorique, l'acide sulfurique, les acides polyphosphoriques, les acides sulfoniques et les acides phosphoniques, comme décrit dans les citations WO-A-9528446 et WO-A-9714753.

Les compositions bitume/polymère réticulées et/ou fonctionnalisées produites selon l'invention sont utilisables comme liants bitumineux, directement ou après mise en émulsion aqueuse, pour la réalisation de revêtements et en particulier de revêtements routiers, notamment du type enduit superficiel, pour la production d'enrobés mis en place à chaud ou à froid, ou encore pour la réalisation de revêtements d'étanchéité.

L'invention est illustrée par les exemples suivants donnés à titre non limitatif.

Dans ces exemples, les quantités et pourcentages sont exprimés en poids sauf indication contraire.

En outre, les caractéristiques rhéologiques et mécaniques des bitumes ou des compositions bitume/polymère auxquelles on fait référence dans lesdits exemples, à savoir pénétrabilité, point de ramollissement Bille et Anneau et indice de PFEIFFER (IP), sont celles définies précédemment.

EXEMPLES 1 A 7 :

On préparait des compositions témoins bitume/polymère réticulées (exemples 1 à 3), ainsi que des compositions bitume/polymère réticulées selon l'invention (exemples 4 à 7), pour en évaluer et comparer les caractéristiques physicomécaniques.

On opérait dans les conditions suivantes :

Exemple 1 (témoin) :

Dans un réacteur maintenu à 180 °C et sous agitation, on introduisait 964 parties d'un bitume de distillation directe ayant une pénétrabilité, déterminée selon les modalités de la norme NF T 66004, égale à 55 et 35 parties d'un copolymère diséquencé de styrène et de butadiène ayant une masse moléculaire en poids égale à 125 000 Daltons et renfermant, en poids, 25% de styrène et 75% de butadiène. Le contenu du réacteur était ensuite maintenu à 180°C sous agitation pendant une durée égale à 2 heures pour former une

masse homogène. A ladite masse, on ajoutait alors 1 partie de soufre à titre d'agent de réticulation et maintenait le milieu réactionnel ainsi formé à 180°C, sous agitation, pendant 2 heures pour produire une composition bitume/polymère réticulée témoin.

Exemple 2 (témoin) :

On préparait une composition bitume/polymère réticulée en opérant comme décrit dans l'exemple 1, avec toutefois utilisation de 948 parties du bitume, de 50 parties du copolymère diséquencé de styrène et de butadiène et de 2 parties de soufre.

Exemple 3 (témoin) :

On préparait un concentré bitume/polymère réticulé en opérant comme suit.

Dans un réacteur maintenu à 180°C et sous agitation, on incorporait 15 parties d'un acide résinique, renfermant 50% de matière active, à 863 parties d'un bitume de distillation directe ayant une pénétrabilité, déterminée selon les modalités de la norme NF T 66004, égale à 190 et maintenait le mélange obtenu à ladite température pendant 20 minutes.

En opérant toujours à la température de 180°C, on incorporait ensuite, sous agitation, au mélange de bitume et d'acide résinique, 120 parties d'un copolymère diséquencé de styrène et de butadiène identique à celui utilisé dans l'exemple 1. Le contenu du réacteur était ensuite maintenu à 180°C, sous agitation, pendant une durée égale à 2 heures pour produire une masse homogène. A ladite masse, on ajoutait alors 2 parties de soufre, à titre d'agent de réticulation, et maintenait le milieu réactionnel ainsi formé à 180°C, sous agitation, pendant 2 heures pour produire un concentré bitume/polymère réticulé témoin. Ledit concentré présentait une pénétrabilité égale à 96, un point de ramollissement bille et anneau de 84°C et un indice de Pfeiffer égal à 6,85.

On diluait ensuite ledit concentré par un bitume de distillation directe ayant une pénétrabilité de 27 et un point de ramollissement bille et anneau (TBA) égal à 58,5°C, en mélangeant pendant 20 minutes, à 180°C et sous agitation, 30 parties du concentré et 70 parties du bitume de distillation directe, pour obtenir une composition bitume/polymère réticulée diluée renfermant 3,6% de copolymère séquencé réticulé.

Exemple 4 (selon l'invention) :

On préparait une composition bitume/polymère réticulée en opérant comme décrit dans l'exemple 1, avec toutefois remplacement du bitume utilisé par un mélange de 420 parties d'un bitume de distillation directe, ayant une pénétrabilité dans l'intervalle 180-220, et de 544 parties d'un bitume oxydé de type semi-soufflé, ayant une pénétrabilité dans l'intervalle 20-30 et un point de ramollissement bille et anneau (TBA) dans l'intervalle 75-85°C.

Exemple 5 (selon l'invention) :

On préparait une composition bitume/polymère réticulée en opérant comme décrit dans l'exemple 1, avec toutefois remplacement du bitume utilisé par un mélange de 617 parties d'un bitume de distillation directe, ayant une pénétrabilité dans l'intervalle 180-220, et de 347 parties d'un bitume oxydé de type semi-soufflé, ayant une pénétrabilité égale à 40 et un point de ramollissement bille et anneau (TBA) égal à 100 °C.

Exemple 6 (selon l'invention) :

On préparait une composition bitume/polymère réticulée, jouant le rôle de concentré, en opérant comme décrit dans l'exemple 1, avec toutefois remplacement du bitume par 923 parties d'un bitume de distillation directe ayant une pénétrabilité dans l'intervalle 180-220 et utilisation de 75 parties du copolymère diséquencé de styrène et de butadiène et de 2 parties de soufre.

On diluait ensuite le concentré obtenu par un bitume oxydé de type semi-soufflé ayant une pénétrabilité dans l'intervalle 20-30 et un point de ramollissement bille et anneau (TBA) dans l'intervalle 75-85°C. Pour ce faire, on mélangeait ledit concentré pendant 20 minutes, à 180°C et sous agitation, avec 952 parties du bitume oxydé, pour obtenir une composition bitume/polymère réticulée diluée renfermant 4% de copolymère séquencé réticulé.

Exemple 7 (selon l'invention) :

On préparait un concentré bitume/polymère réticulé, en opérant comme décrit dans l'exemple 3. Ledit concentré présentait une pénétrabilité égale à 96, un point de ramollissement bille et anneau (TBA) de 84°C et un indice de Pfeiffer égal à 6,85.

On diluait ensuite le concentré obtenu par un mélange de bitumes formé de 75% d'un bitume de distillation directe, ayant une pénétrabilité égale à 27 et un point de ramollissement bille et anneau (TBA) égal à 58,5°C, et de 25% d'un bitume oxydé de type soufflé, ayant une pénétrabilité égale à 40 et un point de ramollissement bille et anneau (TBA) égal à 101°C. La dilution était réalisée en mélangeant 30 parties dudit concentré avec 70 parties du mélange de bitumes pendant 20 minutes, à 180°C et sous agitation, la composition bitume/polymère réticulée diluée obtenue renfermant 3,7% de copolymère séquencé réticulé.

Pour chacune des compositions préparées comme indiqué dans les exemples 1 à 7, on a déterminé les caractéristiques suivantes :

- pénétrabilité à 25°C (Pen.),
- point de ramollissement bille et anneau (TBA),
- indice de PFEIFFER (IP).

Les résultats obtenus sont rassemblés dans le tableau ci-après.
Les teneurs des compositions en copolymère sont exprimées en pourcentages pondéraux de la quantité globale de bitume.

Tableau

| Exemples | 1 | 2 | 3 | 4 | 5 | 6 | 7 |
|---|---|---|---|---|---|---|---|
| copolymère dans la composition finale (% du bitume global) | 3,6 | 5,3 | 3,75 | 3,6 | 3,6 | 4 | 3,75 |
| bitume oxydé dans la composition finale (% du bitume global) | 0 | 0 | 0 | 56,5 | 36 | 50,8 | 18,4 |
| Pen (1/10mm) | 46 | 46 | 35 | 45 | 30 | 58 | 48 |
| TBA (°C) | 61 | 68 | 60,5 | 69,2 | 80 | 69,4 | 63 |
| IP | 1,0 | 2,3 | 0,29 | 2,4 | 3,1 | 3,1 | 1,5 |

Au vu des caractéristiques rassemblées dans le tableau, il apparaît que :

- le remplacement d'une partie du bitume non oxydé par du bitume oxydé dans les compositions bitume/polymère réticulées se traduit par une amélioration des propriétés physiques desdites compositions et notamment par une augmentation du point de ramollissement bille et anneau (TBA) et de l'indice de Pfeiffer, que le bitume oxydé soit présent lors de la préparation des compositions bitume/polymère réticulées (comparer les résultats de l'exemple témoin 1 aux résultats des exemples 4 et 5 selon l'invention) ou qu'il soit seulement utilisé lors de la dilution de concentrés bitume/polymère réticulés (comparer les résultats de l'exemple témoin 3 aux résultats de l'exemple 7 selon l'invention), pour produire les compositions bitume/polymère réticulées ;

- le remplacement d'une partie du bitume non oxydé par du bitume oxydé dans les compositions bitume/polymère réticulées permet, à caractéristiques comparables de pénétrabilité, de point de ramollissement bille et anneau (TBA) et d'indice de Pfeiffer, de réduire la teneur en polymère réticulé de la composition (comparer les résultats de l'exemple témoin 2 aux résultats de l'exemple 4 selon l'invention).

**Revendications**

1. Procédé de préparation de compositions bitume/polymère réticulées et/ou fonctionnalisées à très faible susceptibilité thermique, obtenues par réaction de couplage chimique du polymère au bitume, dans lequel on forme une masse homogène représentant la composition bitume/polymère et constituée d'une matrice bitumineuse dans laquelle est dispersé uniformément un élastomère réticulé et/ou fonctionnalisé, **caractérisé par le fait que** l'on met en contact, en opérant à des températures comprises entre 100 °C et 230 °C, de préférence entre 130°C et 200 °C, et sous agitation pendant une durée d'au moins 5 minutes, un bitume non oxydé et un bitume oxydé choisis pour constituer la matrice bitumineuse, avec, comptés en poids de ladite matrice, 0,5% à 30% de l'élastomère précurseur et 0,01% à 6%, plus particulièrement 0,05% à 3%, d'un agent de réticulation et/ou d'un agent de fonctionnalisation, ledit procédé **se caractérisant en outre en ce que** l'on constitue la matrice bitumineuse en associant, en poids, x % d'un bitume non oxydé, ayant une pénétrabilité comprise entre 35 et 500, et y % d'un bitume oxydé, ayant une pénétrabilité comprise entre 20 et 60, lesdites pénétrabilités étant déterminées selon la norme NF T 66004 et exprimées en 1 / 10 de mm, les valeurs de x et y étant telles que $20 \leq x \leq 95$ et $5 \leq y \leq 80$ avec x+y = 100.

2. Procédé selon la revendication 1, **caractérisé en ce qu'**on met en contact l'élastomère précurseur avec les bitumes non oxydé et oxydé, en opérant à des températures comprises entre 100°C et 230°C, de préférence entre 130 °C et 200 °C, et sous agitation pendant une durée allant de 5 minutes à 8 heures, notamment de 30 minutes à 6 heures, pour former un mélange homogène, puis on incorpore audit mélange l'agent de réticulation et/ou l'agent de fonctionnalisation et on maintient le tout sous agitation à des températures comprises entre 100°C et 230°C, de préférence entre 130 °C et 200°C, et identiques ou non aux températures de mélange de l'élastomère précurseur avec les bitumes non oxydé et oxydé utilisés pour constituer la matrice bitumineuse, pendant une durée allant de 5 minutes à 5 heures, plus particulièrement de 10 minutes à 180 minutes, pour former un produit de réaction constituant la composition bitume/polymère réticulée et/ou fonctionnalisée.

3. Procédé selon la revendication 1 ou 2, **caractérisé en ce que** les pourcentages pondéraux x % de bitume non oxydé et y % de bitume oxydé, associés pour former la matrice bitumineuse de la composition bitume/polymère, sont tels que $35 \leq x \leq 85$ et $15 \leq y \leq 65$ avec x + y = 100.

4. Procédé selon l'une des revendications 1 à 3, **caractérisé en ce que** la quantité d'élastomère précurseur représente 1,5 % à 20 % du poids de la matrice bitumineuse.

5. Procédé selon l'une des revendications 1 à 4, **caractérisé en ce que** le bitume non oxydé, entrant dans la constitution de la matrice bitumineuse, consiste en un bitume unique ou en un mélange de bitumes pris parmi les bitumes de distillation directe, les bitumes de distillation sous pression réduite, les résidus de désasphaltage au propane ou au pentane et les résidus de viscoréduction.

6. Procédé selon la revendication 5, **caractérisé en ce que** le bitume non oxydé est un bitume ou mélange de bitumes pris parmi les bitumes de distillation directe.

7. Procédé selon l'une des revendications 1 à 6, **caractérisé en ce que** le bitume oxydé, associé au bitume non oxydé pour constituer la matrice bitumineuse, consiste en un bitume oxydé unique ou en un mélange de bitumes oxydés pris parmi les bitumes soufflés et les bitumes semi-soufflés.

8. Procédé selon l'une des revendications 1 à 7, **caractérisé en ce que** le bitume oxydé, associé au bitume non oxydé pour constituer la matrice bitumineuse, possède un point de ramollissement bille et anneau, défini selon la norme NF T 66008, allant de 60 °C à 120 °C.

9. Procédé selon l'une des revendications 1 à 8, **caractérisé en ce que** l'élastomère précurseur consiste en au moins un copolymère choisi parmi les copolymères statistiques ou séquencés de styrène et d'un diène conjugué, notamment butadiène, isoprène, chloroprène, butadiène carboxylé ou isoprène carboxylé.

10. Procédé selon la revendication 9, **caractérisé en ce que** l'élastomère précurseur consiste en un ou plusieurs copolymères choisis parmi les copolymères séquencés linéaires ou étoilés, avec ou sans charnière statistique, de styrène et de butadiène, de styrène et d'isoprène, de styrène et de chloroprène, de styrène et de butadiène carboxylé ou encore de styrène et d'isoprène carboxylé.

11. Procédé selon la revendication 9 ou 10, **caractérisé en ce que** les copolymères de styrène et de diène conjugué possèdent une teneur en styrène allant de 5 % à 50 % en poids.

12. Procédé selon l'une des revendications 9 à 11, **caractérisé en ce que** les copolymères de styrène et de diène conjugué présentent, avant réticulation et/ou fonctionnalisation, des masses moléculaires moyennes en poids comprises entre 10 000 daltons et 600 000 daltons et de préférence entre 30 000 daltons et 400 000 daltons.

13. Procédé selon l'une des revendications 1 à 12, **caractérisé en ce que** l'on forme un élastomère fonctionnalisé au sein de la matrice bitumineuse, en utilisant un agent de fonctionnalisation, notamment un agent de fonctionnalisation pris parmi les acides ou esters carboxyliques à groupements thiols ou disulfures ou parmi les polyesters d'acides thiolcarboxyliques.

14. Procédé selon l'une des revendications 1 à 13, **caractérisé en ce que** l'élastomère est fonctionnalisé et **en ce que** l'on incorpore à la composition bitume/polymère fonctionnalisée, au cours de sa préparation, un ou plusieurs additifs réactifs susceptibles de réagir avec les groupements fonctionnels de l'élastomère, la quantité de l'additif réactif ou des additifs réactifs allant de 0,01 % à 10 % et plus particulièrement de 0,05 % à 5 % du poids de bitume présent dans la composition.

15. Procédé selon l'une des revendications 1 à 14, **caractérisé en ce que** l'on forme un élastomère réticulé au sein de la matrice bitumineuse, en utilisant un agent de réticulation, notamment un agent de réticulation du type agent de réticulation donneur de soufre ou du type composé peroxydé générant des radicaux libres aux températures comprises entre 100 °C et 230 °C.

16. Procédé selon l'une des revendications 1 à 15, **caractérisé en ce qu'**on incorpore à la composition bitume/ polymère réticulée et/ou fonctionnalisée, au cours de sa préparation, un ou plusieurs polymères additionnels différents de l'élastomère précurseur, en quantité globale comprise entre 0,3 % et 20 % et de préférence entre 0,5 % et 10 % du poids du bitume desdites compositions.

17. Application des composition obtenues par le procédé selon l'une quelconque des revendications 1 à 16, comme liants bitumineux utilisables, directement ou après mise en émulsion aqueuse, pour la réalisation de revêtements et en particulier de revêtements routiers, notamment du type enduit superficiel, pour la production d'enrobés mis en place à chaud ou à froid, ou encore pour la réalisation de revêtements d'étanchéité.

**Claims**

1. A process for preparing crosslinked and/or functionalised bitumen/polymer compositions with very low thermal sensitivity, obtained by a chemical coupling reaction of the polymer to the bitumen, in which a homogeneous mass is formed representing the bitumen/polymer composition and consisting of a bituminous matrix in which there is uniformly dispersed a crosslinked and/or functionalised elastomer, **characterised in that** a non-oxidised bitumen and an oxidised bitumen selected to constitute the bituminous matrix are brought into contact, at temperatures of between 100°C and 230°C, preferably between 130°C and 200°C, with stirring for a period of at least 5 minutes, with, stated by weight of said matrix, 0.5% to 30% of the precursor elastomer and 0.01% and 6%, more particularly 0.05% to 3%, of a crosslinking agent and/or a functionalising agent, said process being additionally **characterised in that** the bituminous matrix is constituted by associating, by weight, x% of a non-oxidised bitumen, having a penetrability of between 35 and 500, and y% of an oxidised bitumen, having a penetrability of between 20 and 60, said penetrabilities being determined in accordance with the standard NF T 66004 and expressed in tenths of a mm, the values of x and y being such that $20 \leq x \leq 95$ and $5 \leq y \leq 80$ with $x + y = 100$.

2. A process according to claim 1, **characterised in that** the precursor elastomer is brought into contact with the non-oxidised and oxidised bitumens, at temperatures of between 100°C and 230°C, preferably between 130°C and 200°C, with stirring for a period ranging from 5 minutes to 8 hours, in particular 30 minutes to 6 hours, to form a homogeneous mixture, then the crosslinking agent and/or the functionalising agent is incorporated into said mixture and the mixture is kept agitated at temperatures of between 100°C and 230°C, preferably between 130°C and 200°C, which are identical to or different from the temperatures at which the precursor elastomer is mixed with the non-oxidised and oxidised bitumens used to constitute the bituminous matrix, for a period ranging from 5 minutes to 5 hours, more particularly from 10 minutes to 180 minutes, to form a reaction product constituting the crosslinked and/or functionalised bitumen/polymer composition.

3. A process according to claim 1 or claim 2, **characterised in that** the x% of non-oxidised bitumen and y% of oxidised bitumen, in percent by weight, associated to form the bituminous matrix of the bitumen/polymer matrix are such that $35 \leq x \leq 85$ and $15 \leq y \leq 65$ with $x + y = 100$.

4. A process according to one of claims 1 to 3, **characterised in that** the precursor elastomer quantity represents 1.5% to 20% of the weight of the bituminous matrix.

5. A process according to one of claims 1 to 4, **characterised in that** the non-oxidised bitumen, constituting part of the bituminous matrix, consists of a single bitumen or of a mixture of bitumens selected from direct distillation bitumens, reduced pressure distillation bitumens, propane or pentane deasphalting residues and visbreaking residues.

6. A process according to claim 5, **characterised in that** the non-oxidised bitumen is a bitumen or mixture of bitumens selected from among direct distillation bitumens.

7. A process according to one of claims 1 to 6, **characterised in that** the oxidised bitumen, associated with the non-oxidised bitumen to constitute the bituminous matrix, consists of a single oxidised bitumen or a mixture of oxidised bitumens selected from among blown bitumens and semi-blown bitumens.

8. A process according to one of claims 1 to 7, **characterised in that** the oxidised bitumen, associated with the non-oxidised bitumen to constitute the bituminous matrix, has a ball and ring softening point, defined in accordance with standard NF T 66008, ranging from 60°C to 120°C.

9. A process according to one of claims 1 to 8, **characterised in that** the precursor elastomer consists of at least one copolymer selected from among the random or block copolymers of styrene and a conjugated diene, in particular butadiene, isoprene, chloroprene, carboxylated butadiene or carboxylated isoprene.

10. A process according to claim 9, **characterised in that** the precursor elastomer consists of one or more copolymers selected from among the linear or star block copolymers, with or without a random hinge, of styrene and isoprene, styrene and chloroprene, styrene and carboxylated butadiene or alternatively styrene and carboxylated isoprene.

11. A process according to claim 9 or 10, **characterised in that** the copolymers of styrene and conjugated diene have a styrene content ranging from 5% to 50% by weight.

12. A process according to one of claims 9 to 11, **characterised in that** the copolymers of styrene and conjugated diene have, before crosslinking and/or functionalisation, weight average molecular weights of between 10,000 and 600,000 daltons and preferably between 30,000 and 400,000 daltons.

13. A process according to one of claims 1 to 12, **characterised in that** a functionalised elastomer is formed within the bituminous matrix using a functionalising agent, in particular a functionalising agent selected from among carboxylic acids or esters containing thiol or disulfide groups or from among thiocarboxylic acid polyesters.

14. A process according to one of claims 1 to 13, **characterised in that** the elastomer is functionalised and **in that** one or more reactive additives capable of reacting with the functional groups of the elastomer is/are incorporated into the functionalised bitumen/polymer composition during preparation thereof, the quantity of reactive additive or reactive additives ranging from 0.01% to 10% and more particularly from 0.05% to 5% by weight of the bitumen present in the composition.

15. A process according to one of claims 1 to 14, **characterised in that** a crosslinked elastomer is formed within the bituminous matrix, using a crosslinking agent, in particular a crosslinking agent of the sulfur donor crosslinking agent type or the peroxy compound type which generates free radicals at temperatures of between 100°C and 230°C.

16. A process according to one of claims 1 to 15, **characterised in that** one or more additional polymers different from the precursor elastomer is/are incorporated into the crosslinked and/or functionalised bitumen/polymer composition, in a total quantity of between 0.3% and 20% and preferably between 0.5% and 10% of the weight of the bitumen of said compositions.

17. Use of the compositions obtained by the process according to any one of claims 1 to 16 as bituminous binders suitable for use, directly or after conversion into an aqueous emulsion, in producing coatings and in particular road coatings, especially surface dressings, in producing hot-laid or cold-laid paving mixes, or alternatively in producing sealing coats.

**Patentansprüche**

1. Verfahren zur Herstellung von vernetzten und/oder funktionalisierten Bitumen/Polymer-Zusammensetzungen mit sehr geringer thermischer Empfindlichkeit, erhalten durch eine chemische Kupplungsreaktion des Polymers mit dem Bitumen, wobei eine homogene Masse gebildet wird, die die Bitumen/Polymer-Zusammensetzung darstellt und aus einer bituminösen Matrix besteht, in der ein vernetztes und/oder funktionalisiertes Elastomer gleichmäßig dispergiert ist, **dadurch gekennzeichnet, dass** man bei Arbeitstemperaturen zwischen 100°C und 230°C, vorzugsweise zwischen 130°C und 200°C, unter Rühren über einen Zeitraum von mindestens 5 Minuten ein nicht oxidiertes Bitumen und ein oxidiertes Bitumen, die ausgewählt sind, um die bituminöse Matrix zu bilden, mit 0,5% bis 30%, bezogen auf das Gewicht der Matrix der Elastomer-Vorstufe, und 0,01% bis 6%, insbesondere 0,05% bis 3%, eines Vernetzungs- und/oder eines Funktionalisierungsmittels in Berührung bringt, wobei das Verfahren darüber hinaus **dadurch gekennzeichnet ist, dass** die bituminöse Masse gebildet wird, indem man, bezogen auf das Gewicht, x % eines nicht-oxidierten Bitumens mit einer Penetrabilität zwischen 35 und 500 und y % eines oxidierten Bitumens mit einer Penetrabilität zwischen 20 und 60, in Berührung bringt, wobei diese Penetrabilitäten nach der Norm NF T 66004 bestimmt und in 1/10 mm ausgedrückt sind, und die Werte für x und y $20 \leq x \leq 95$ und $5 \leq y \leq 80$ sind, wobei x + y = 100 beträgt.

2. Verfahren nach Anspruch 1, **dadurch gekennzeichnet, dass** man die Elastomer-Vorstufe mit den nicht-oxidierten und den oxidierten Bitumina bei Arbeitstemperaturen zwischen 100°C und 230°C, vorzugsweise zwischen 130°C und 200°C, unter Rühren über einen Zeitraum von 5 Minuten bis 8 Stunden, insbesondere 30 Minuten bis 6 Stunden, in Berührung bringt, um ein homogenes Gemisch zu bilden, woraufhin man diesem Gemisch das Vernetzungsmittel und/oder das Funktionalisierungsmittel zusetzt und das Ganze unter Rühren bei Temperaturen zwischen 100°C und 230°C, vorzugsweise zwischen 130°C und 200°C, identischen oder nicht-identischen mit den Mischtemperaturen der Elastomer-Vorstufe mit den nicht-oxidierten und den oxidierten Bitumina zur Bildung der bituminösen Matrix, über einen Zeitraum von 5 Minuten bis 5 Stunden, insbesondere von 10 Minuten bis 180 Minuten, hält, um ein Reaktionsprodukt zu bilden, das die Zusammensetzung aus Bitumen und vernetztem und/oder funktionalisiertem Polymer darstellt.

3. Verfahren nach Anspruch 1 oder 2, **dadurch gekennzeichnet, dass** die x Gew.-% des nicht-oxidierten Bitumens und die y Gew.% des oxidierten Bitumens, die zur Bildung der bituminösen Matrix der Zusammensetzung aus Bitumen und Polymer vereinigt werden, $35 \leq x \leq 85$ und $15 \leq y \leq 65$ betragen, wobei x+y = 100 beträgt.

4. Verfahren nach einem der Ansprüche 1 bis 3, **dadurch gekennzeichnet, dass** die Menge der Elastomer-Vorstufe 1,5 bis 20% des Gewichts der bituminösen Matrix beträgt.

5. Verfahren nach einem der Ansprüche 1 bis 4, **dadurch gekennzeichnet, dass** das nicht-oxidierte Bitumen, das in die Zusammensetzung der bituminösen Matrix eingeht, aus einem einzigen Bitumen oder aus einem Gemisch aus Bitumina aus der Direktdestillation, aus Bitumina aus der Destillation unter vermindertem Druck, aus Resten der Entasphaltierung von Propan oder Pentan und den Resten der Viskoreduktion besteht.

6. Verfahren nach Anspruch 5, **dadurch gekennzeichnet, dass** das nicht-oxidierte Bitumen ein Bitumen oder ein Gemisch aus Bitumina darstellt, das aus Bitumina der Direktdestillation erhalten wurde.

7. Verfahren nach einem der Ansprüche 1 bis 6, **dadurch gekennzeichnet, dass** das oxidierte Bitumen, das mit dem nicht-oxidierten Bitumen vereinigt wurde, um die bituminöse Matrix zu bilden, aus einem einzigen oxidierten Bitumen oder einem Gemisch aus oxidierten Bitumina besteht, das aus geblasenen Bitumina und halb-geblasenen Bitumina erhalten wurde.

8. Verfahren nach einem der Ansprüche 1 bis 7, **dadurch gekennzeichnet, dass** das oxidierte Bitumen, das mit dem nicht-oxidierten Bitumen vereinigt wurde, um die bituminöse Matrix zu ergeben, einen Erweichungspunkt Ring und Kugel, definiert nach der Norm NF T 66008, von 60°C bis 120°C hat.

9. Verfahren nach einem der Ansprüche 1 bis 8, **dadurch gekennzeichnet, dass** die Elastomer-Vorstufe aus mindestens einem Copolymer besteht, das aus statistischen oder Block-Polymeren des Styrols und eines konjugierten Diens, insbesondere des Butadiens, Isoprens, Chloroprens, carboxylierten Butadiens oder carboxylierten Isoprens, ausgewählt ist.

10. Verfahren nach Anspruch 9, **dadurch gekennzeichnet, dass** die Elastomer-Vorstufe aus einem oder mehreren Copolymeren besteht, die ausgewählt werden aus linearen oder sternförmigen BlockCopolymeren, aus Styrol und Butadien, aus Styrol und Isopren, aus Styrol und Chlopren, aus Styrol und einem carboxylierten Butadien oder aus Styrol und carboxyliertem Isopren, mit oder ohne statistischem Bindeglied.

11. Verfahren nach Anspruch 9 oder 10, **dadurch gekennzeichnet, dass** die Copolymere aus Styrol und konjugiertem Dien einen Styrolgehalt von 5 bis 50 Gew.-% haben.

12. Verfahren nach einem der Ansprüche 9 bis 11, **dadurch gekennzeichnet, dass** die Copolymere aus Styrol und konjugiertem Dien nach der Vernetzung und/oder Funktionalisierung mittlere Molekularmassen (als Gewicht) zwischen 10.000 Dalton und 600.000 Dalton, vorzugsweise zwischen 30.000 Dalton und 400.000 Dalton, haben.

13. Verfahren nach einem der Ansprüche 1 bis 12, **dadurch gekennzeichnet, dass** man ein funktionalisiertes Elastomer in der bituminösen Matrix bildet, indem man ein Funktionalisierungsmittel, insbesondere ein Funktionalisierungsmittel aus der Gruppe der Carbonsäuren oder -ester mit Thiol- oder Dischwefelgruppen oder aus Polyestern von Thiolcarbonsäuren verwendet.

14. Verfahren nach einem der Ansprüche 1 bis 13, **dadurch gekennzeichnet, dass** das Elastomer funktionalisiert wird, und **dadurch**, dass der Zusammensetzung aus Bitumen und funktionalisiertem Polymer während ihrer Herstellung ein oder mehrere reaktive Zusätze zugesetzt werden, die in der Lage sind, mit den funktionellen Gruppen des Elastomers zu reagieren, wobei die Menge des reaktiven Zusatzes oder der reaktiven Zusätze 0,01% bis 10%, insbesondere 0,05% bis 5% des Gewichts des in der Zusammensetzung vorhandenen Bitumens beträgt.

15. Verfahren nach einem der Ansprüche 1 bis 14, **dadurch gekennzeichnet, dass** man ein vernetztes Elastomer innerhalb der bituminösen Matrix bildet, indem man ein Vernetzungsmittel, insbesondere ein Vernetzungsmittel von der Art, das Schwefel abgibt, oder von der Art einer Peroxidverbindung, die freie Radikale bildet, bei Temperaturen zwischen 100°C und 230°C verwendet.

16. Verfahren nach einem der Ansprüche 1 bis 15, **dadurch gekennzeichnet, dass** man der Zusammensetzung aus Bitumen und vernetztem und/oder funktionalisiertem Polymer während seiner Herstellung ein oder mehrere zusätzliche Polymere, die sich von der Elastomer-Vorstufe unterscheiden, in einer Gesamtmenge zwischen 0,3% und 20%, und vorzugsweise zwischen 0,5% und 10%, bezogen auf das Gewicht des Bitumens dieser Zusammensetzung, zusetzt.

17. Anwendung der nach dem Verfahren nach einem der Ansprüche 1 bis 16 erhaltenen Zusammensetzungen als bituminöse Bindemittel, die direkt oder nach Überführung in eine wässrige Emulsion erhalten werden, als Beläge, insbesondere als Straßenbeläge, insbesondere vom Typ der Oberflächenbeschichtung, für die Herstellung von Mischgut, die bei Hitze oder Kälte aufgebracht werden, oder für die Herstellung von Dichtungsbelägen.